# EUROPEAN PATENT SPECIFICATION

(11) **EP 1 547 720 B1**
(45) Date of publication and mention of the grant of the patent: **30.09.2015**
(21) Application number: 03258157.1
(22) Date of filing: 24.12.2003
(51) Int. Cl.: B23K 31/02, B23K 33/00, B23K 20/12

(54) **Welding process for large structures**
Verfahren zum Schweissen von grossformatigen Strukturen
Procédé de soudage de grandes structures

(43) Date of publication of application: 29.06.2005
(73) Proprietor: Airbus Operations Limited, Bristol BS34 7PA (GB)
(72) Inventor: Day, Roger Anthony, Bristol, BS9 3EB (GB); Tighe, David John, Bristol, BS48 3BN (GB)
(74) Representative: Bardo, Julian Eason

(56) References cited:
- EP-A- 0 501 831
- US-A- 5 305 505
- US-A1- 2003 201 306

## Description

This invention relates to a method of welding together two metal components to form a large structure as claimed in claim 1, suitable for use as an aerospace component and to a large structure so created. In this context, an aerospace component means one that forms part of a fixed-wing aircraft, a helicopter, a missile, a satellite, a space structure or the like. The invention relates particularly, but not exclusively, to a method of welding together two large metal components to form a part or a whole of a spar for a wing of an aircraft and to a spar so created.

In many applications it is necessary to weld together two large metal components. In many applications, it is also useful if the two components have different properties, thereby creating a structure having certain properties in one section and different properties in another section. For example, a spar in the wing of an aircraft is subject to forces in its upper section different from those in its lower section and it is therefore advantageous if the two sections are constructed from metals having different properties.

Large aircraft wings are assembled from many components by joining them together with fasteners (examples of which are bolts and rivets). Each wing typically has two main spars, a forward spar and a rear spar, both running the length of the wing. Some large wings also have a centre spar. Each spar has a length, measured in a direction from the joint of the wing and the fuselage to the wing tip, and a height, measured in a direction from the upper surface to the lower surface of the wing (typically being a maximum of the order of 1 to 2 metres in a large transport aircraft, but decreasing steadily along the length of the wing to the wing tip). The spar is relatively narrow along most of its height but the upper and lower portions are of a greater width (typically no more than 200 mm) so that the overall cross-sectional shape of the spar is usually substantially that of a 'C', although other shapes such as an 'I' are possible. The spar is strengthened at regular intervals along its length by stiffeners which are substantially the same height as the spar but have a width greater than the width of the spar away from its top and bottom portions. The stiffeners take the form of plates located transverse to the spar length.

A spar can be constructed from many individual components which are riveted and bolted together (known as a fabricated spar) or from one piece (from plate material, an extrusion or a forged billet) which is then machined (known as an integrally-machined spar). Fabricated spars can be formed from metal components having different properties, which are bolted together. However, fabricated spars are labour-intensive to assemble, requiring the drilling of many holes and the setting of rivets and bolts. They are also expensive because the assembly process requires sophisticated tooling, and they are heavier because of the material overlap and the rivets and bolts. They are also at greater risk of fatigue damage due to the large number of fastener holes. The advantages of integrally-machined spars are that material overlap is minimised and bolts and rivets are not required (thereby reducing the overall weight) and sophisticated tooling is not needed for assembly. However, such spars must be machined from one piece of material, which material must be chosen as a compromise between the requirements at the top of the spar (mainly compressive loads) and the requirements at the bottom of the spar (mainly tensile loads).

An alternative possibility we have considered is that the spar could be formed from two metal components, the metals having different properties, which have been welded together. In this case, the spar could be machined before or after welding. Welding of aerospace structures has to be carried out to the highest standards, and only certain high-quality processes are acceptable. One method that is particularly suitable for welding together metals having different properties is friction stir welding. Friction stir welding is a well-known and useful welding process but is, unfortunately, limited by the depth of welding that can be achieved. Currently the maximum depth of material which can be reliably welded by friction stir welding is about 6 to 10 mm, which makes it apparently unsuitable for welding components of large structures such as spars.

US 6,450,394, which is considered the closest prior art and discloses the preamble of claim 1 discloses a method of forming an aircraft component in which two components are joined together by friction stir butt welding. The two components are subsequently machined until the friction stir weld becomes a full penetration weld.

It is an object of the invention to provide a method for welding together two metal components to create a large structure suitable for use as an aerospace component.

It is a further object of the invention to provide a large structure formed from welding together two components.

According to the invention there is provided a method for welding together two metal components according to claim 1

By reducing the contact width of the surfaces it becomes feasible to weld together components which would otherwise be difficult or impossible to weld together. Also, since the structure is formed by more than one component, each component can be of smaller cross-section than the whole structure and can therefore be made longer from a given volume of material. This is, for example, advantageous when a large spar of an aircraft wing is being manufactured, since the limits on the volume of a billet of material that can be rolled, forged or extruded mean that it is not feasible to produce a full length spar in one piece. Conventionally the spar is produced in lengths that are joined end to end. By using the present invention, however, each component can be produced in a longer length from a given volume of material reducing or eliminating the need for lengthwise joining of the spar. In certain structures, the invention can give rise to even greater advantages if more than two components are joined together side-by-side to form a very long, single structure.

The large structure may be suitable for use as an aerospace component either with or without further modification. For example, the large structure may need a further treatment step before it is used as an aerospace component; thus it may be a precursor to the aerospace component. Alternatively, the large structure may, when welded, be substantially ready for use as an aerospace component, no further modification being required.

By providing a feature on the surface to be welded of at least one of the metal components, which reduces the contact width between the two components, it is possible to use friction stir welding to join the two components, even when the two components are large. Preferably, the at least one weld has a constant width and extends along the length of the components to be joined. Preferably, the at least one weld has no discontinuities along its length.

In one embodiment, the metal components are billets and the method further comprises the step of machining the large structure after the step of welding together the components. Thus, in this method, the billets are first welded together and then the entire structure can be machined to the required shape.

Where the method further comprises the step of machining the large structure after welding, the billets may be rough machined before the step of welding together the components. In this method, the billets have approximately the required shape before welding but are then machined to the exact shape once the components have been welded together.

The step of machining may include removing at least a part of the at least one weld.

Preferably, the feature in the surface to be welded comprises a recess extending substantially the length of the component. The recess, which may be a rebate, may take any of a wide variety of forms. In one embodiment, the recess is in the form of a central groove extending along substantially the length of one or both of the components. This results in two distinct contact areas either side of the groove, each of which have a width which is less than the width of each component. Each contact area can be welded separately and the reduced width means that the contact areas can be welded by friction stir welding.

The welded areas may be the same or different widths. The width of the groove may be set according to the current friction stir welding weld-depth capability. The welded areas may be at the same height so that the two welds are coincident. Alternatively, the welded areas may be at different heights so that the two welds are offset from one another. Usually, the welded areas will be perpendicular to the height direction, but this need not be the case (particularly with friction stir welds, as friction stir welding can be carried out at any orientation).

In the above-mentioned embodiment, if the method further comprises the step of machining after the step of welding, the step of machining may include removing part of one of the welds. Alternatively, the step of machining may comprise removing all of one of the welds, leaving only one welded area to one side of the groove.

The feature may be formed in the component during extrusion of the component. Alternatively, the feature may be formed into the component by machining once the component has been formed.

The step of welding together the components comprises friction stir welding. This is advantageous because friction stir welding is ideal for welding together metals having different and even dissimilar properties.

Usually, the metals of each metal component will have different properties. In one embodiment, each metal component comprises a different aluminium alloy. For example, each component may comprise one of 2000 series, 6000 series, 7000 series aluminium alloys or aluminium-lithium alloy.

In one especially preferred embodiment, the large structure is a part or a whole of a spar for a wing of an aircraft. The method of the invention is particularly well suited to the manufacture of spars.

In one embodiment, there is also provided a method for welding together two metal components to form a part or a whole of a spar for a wing of an aircraft.

It will be understood that any features described in relation to one aspect of the invention may also be applicable to another aspect of the invention.

An embodiment of the invention will now be described with reference to the accompanying drawings of which:
- Figure 1: is a perspective view of a spar section;
- Figure 2: is a cross sectional view along the line II-II in Figure 1;
- Figure 3: is a cross sectional view of an alternative spar section; and
- Figure 4: is a cross sectional view along the line IV-IV in Figure 1.

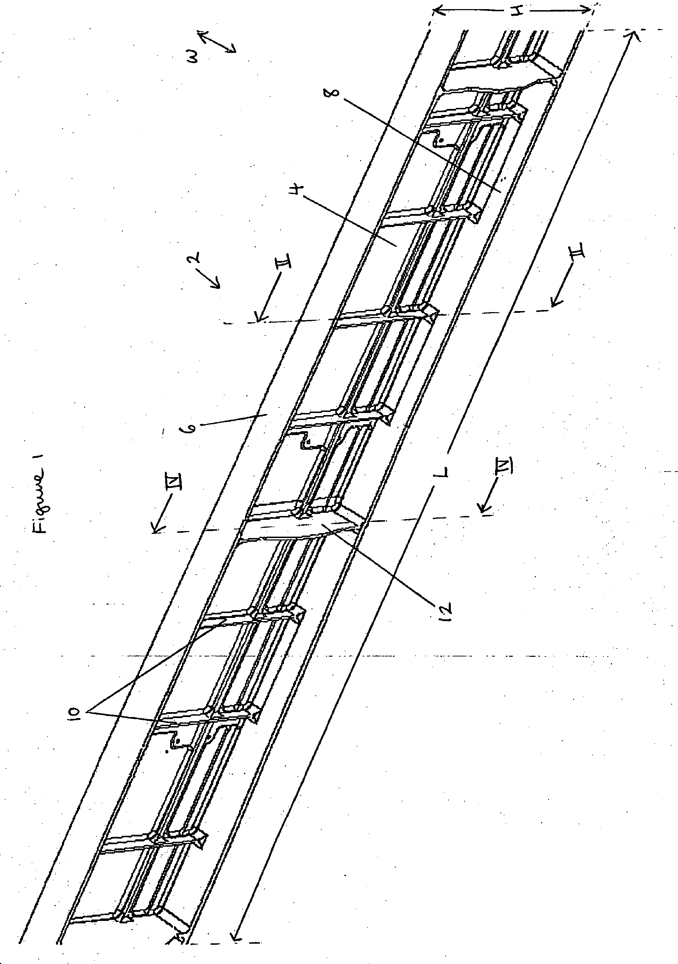

Figure 1 is a perspective view of a section of spar 2. The spar section has a web 4 which is relatively narrow, an upper flange 6 and a lower flange 8. At regular intervals along the length L of the spar are stiffeners 10 for strengthening the spar. The stiffeners 10 are the same height H as the spar but extend further in the width direction W. Thus, the stiffeners appear as plates whose planes are perpendicular to the spar length. It will be seen that the height of the spar section decreases from one end of the spar section to the other. At intervals along the length of the spar, ribs (not shown) are attached to certain of the stiffeners 10 at locations 12.

Figure 1 shows an integrally-machined spar section. The entire spar is formed from several separately-machined sections (like that in Figure 1) which are then joined together (e.g. by rivets and bolts), since the size of each section is limited by the volume of material that can be rolled or extruded. The stiffeners 10 are formed into the spar section when the spar section is machined i.e. they are formed from the same continuous piece of material as the rest of the spar section.

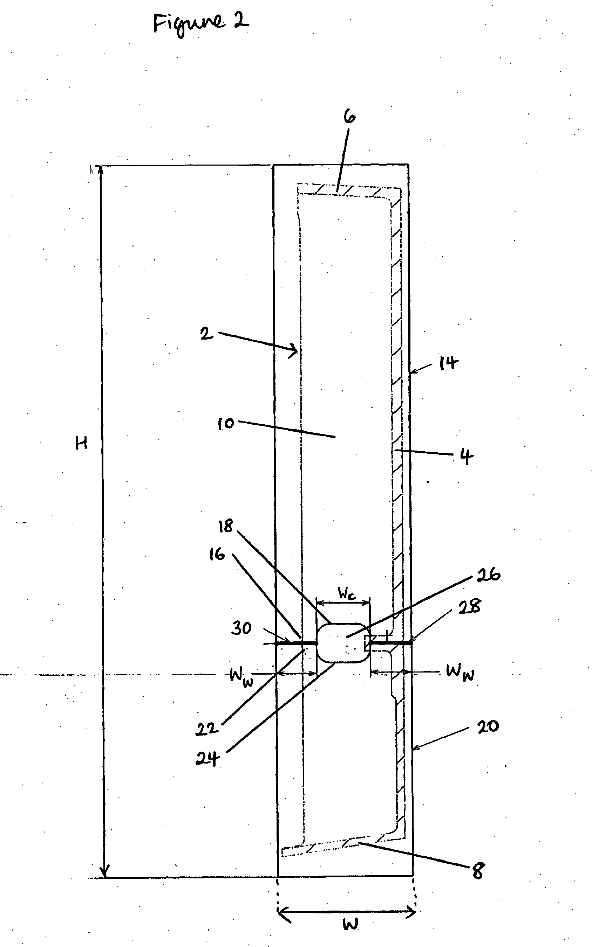

Figure 2 is a cross-sectional view of the spar taken at line II-II in Figure 1. Figure 2 also shows the billets from which the spar has been machined. The outermost lines in Figure 2 show the outlines of billets 14, 20. Upper billet 14 is formed from Advanced 7000 series aluminium alloy and lower billet 20 is formed from Advanced 2000 series aluminium alloy. In the lower surface 16 of the upper billet 14, there is a central groove 18 running the length of the upper billet 14. In the upper surface 22 of the lower billet 20, there is also a central groove 24 running the length of the lower billet 20.

Billets 14 and 20 may be extruded, in which case the groove may be formed as the billet is being extruded. Alternatively, the groove may be machined into the billet once the billet has been formed.

Within the outline of the billets 14, 20, Figure 2 also shows the resulting spar section 2, having web 4, upper flange 6 and lower flange 8. The spar cross-section is shown cross-hatched. It will be appreciated that the stiffener 10 is plate-like and does not extend far in the length direction whereas the C-shaped cross-section (cross-hatched) extends the length of the spar section in the length direction.

To construct the spar, the billets 14, 20 are placed adjacent so that groove 18 in lower surface 16 of upper billet 14 aligns with groove 24 in upper surface 22 of lower billet 20, forming a central channel 26 having a width W_{c} extending the length of the resulting structure. Then the two billets are welded together via a first friction stir weld 28 on the right of the channel 26 and a second friction stir weld 30 on the left of channel 26. The first weld 28 is carried out from the right hand side of the billets 14, 20 and has a constant width W_{w}. The first weld 28 extends with constant width W_{w} and with no discontinuities along the length of the billets. The second weld 30 is carried out from the left hand side of the billets 14, 20 and also has a constant width W_{w}. The second weld 30 extends with constant width W_{w} and with no discontinuities along the length of the billets. In Figure 2, the welds are positioned at a height which corresponds to the neutral axis of the spar.

Once the billets have been welded together, resulting in a large structure formed of two sections(the upper section of Advanced 7000 series aluminium alloy, the lower section of Advanced 2000 series aluminium alloy), the large structure is machined to the required shape, like that shown in Figure 1. It will be appreciated that for most of the structure's length, between the stiffeners 10, the machining will remove all of the second weld 30, resulting in the C-shaped, hatched cross-section shown in Figure 2. At regular intervals along the length of the spar section, the machining will remove only part of the second weld, leaving the stiffeners 10. The resulting spar section 2 will have a shape like that shown in Figure 1, each stiffener 10 having a hole of width w resulting from channel 26.

Alternatively, the upper and lower billets may be first machined to shape before joining the two machined portions via first weld 28 and second weld 30. Or, the billets may be rough machined, then welded, then more accurately machined.

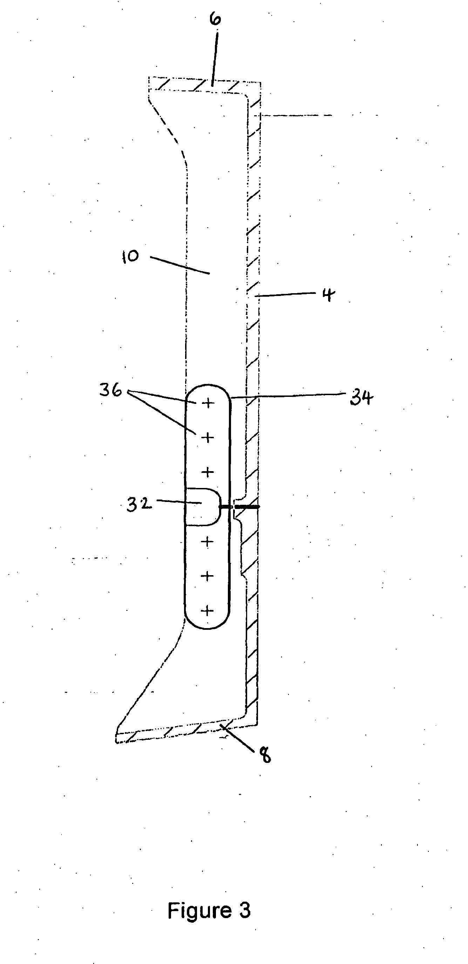

Figure 3 is a cross-sectional view of an alternative embodiment of spar, again showing a stiffener 10. Like the embodiment in Figure 2, the spar section has a web 4, an upper flange 6 and a lower flange 8. Again, the spar cross section is shown cross hatched.

In the embodiment shown in Figure 3, the stiffener 10 has a smaller width than the stiffener of Figure 2. Thus, the stiffener 10, rather than having a hole resulting from channel 26, has a cut-out 32. This may be formed by machining away billets 14, 20 shown in Figure 2 to remove the entire second weld 30 and a part of the channel 26. Alternatively, it may be formed by machining upper and lower billets to shape before welding a single weld to join them. Or, it may be formed by rough machining, followed by welding, followed by more accurate machining.

The stiffener of Figure 3 is liable to be weaker than that in Figure 2, so is strengthened by a strap plate 34. Strap plate 34 is attached to the stiffener by rivets 36.

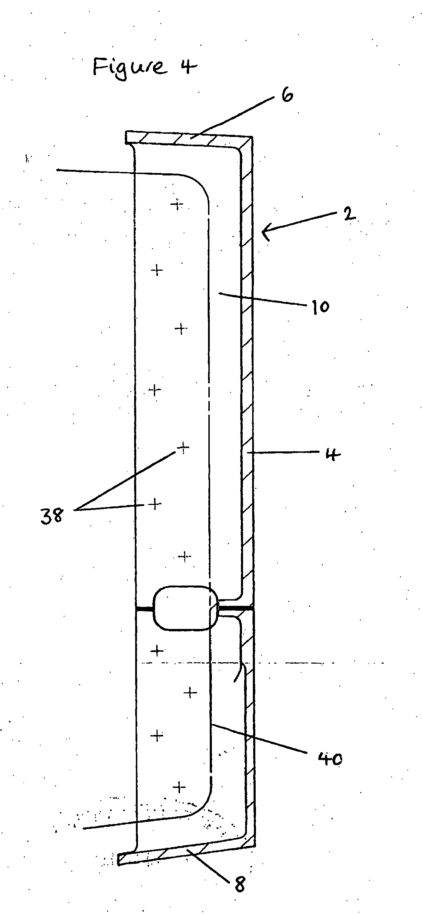

Figure 4 is a cross-sectional view of the spar taken at line IV-IV in Figure 1. As in Figure 2, Figure 4 shows web 4, upper flange 6 and lower flange 8 of spar section 2 as well as stiffener 10. Shown schematically is a rib 40 which is attached to the stiffener by rivets 38. The rib 40 connects the illustrated spar section with an adjacent spar section (not shown) and other components of the wing.

As shown in Figure 1, usually a rib will not be attached to every stiffener but will only be attached to, for example, every fourth stiffener. In a common arrangement, the stiffeners to which a rib is attached will have a greater width (like the stiffener in Figure 2) and the intermediate stiffeners will have a narrower width (like the stiffener in Figure 3). The intermediate stiffeners may or may not be strengthened with strap plates 34. However, other arrangements are possible, for example all the stiffeners could be of the form shown in Figure 2, or all the stiffeners could be of the form shown in Figure 3.

## Claims

1. A method for welding together two metal components (14, 20) to form a large structure suitable for use as an aerospace component (2), the method comprising the steps of:
providing two metal components (14, 20) to be welded together, each component (14, 20) having a length (L), a width (W), a height (H) and a surface to be welded (16, 22),
**characterised in that** the surface to be welded (16, 22) of at least one of the metal components (14, 20) includes a feature (18, 24) extending substantially along the length of the component, wherein the feature is a groove (18, 24) creating two distinct contact areas either side of the groove, each contact area having a width (W_{w}) of less than the width (W) of each component (14, 20), and the contact width of the surfaces to be welded of the two components being reduced to less than the width (W_{w}) of each component; and the method further comprises the step of subsequently
friction stir welding together the components.

2. A method according to claim 1 wherein the metal components (14, 20) are billets and the method further comprises the step of machining the large structure after the step of welding together the components (14, 20).

3. A method according to claim 2 wherein the billets (14, 20) are rough machined before the step of welding together the components.

4. A method according to any one of the preceding claims wherein the feature (18, 24) is formed in the component (14, 20) during extrusion of the component (14, 20).

5. A method according to any one of claims 1 to 3 wherein the feature (18, 24) is formed into the component by machining.

6. A method according to any one of the preceding claims wherein the large structure is a spar (2) for a wing for an aircraft.

## Patentansprüche

1. Verfahren zum Verschweißen von zwei Metallkomponenten (14, 20), um eine große Struktur zu bilden, die zur Verwendung als Luftfahrtkomponente (2) geeignet ist, wobei das Verfahren die folgenden Schritte aufweist:
Bereitstellen von zwei Metallkomponenten (14, 20), die miteinander verschweißt werden, wobei jede Komponente (14, 20) eine Länge (L), eine Breite (W), eine Höhe (H) und eine Oberfläche zum Verschweißen (16, 22) aufweist,
**dadurch gekennzeichnet, dass** die zu verschweißende Oberfläche (16, 22) der zumindest einen Metallkomponente (14, 20) ein Merkmal (18, 24)aufweist, welches sich im Wesentlichen längs der Länge der Komponente erstreckt,
wobei das Merkmal als Rille (18, 24) ausgebildet ist, welche zwei gesonderte Kontaktbereiche auf jeder Seite der Rille bildet, wobei jeder Kontaktbereich eine geringere Breite (W_{w}) als die Breite (W) einer jeden Komponente (14, 20) aufweist, und die Kontaktbreite der zu verschweißenden Oberflächen der zwei Komponenten auf weniger als die Breite von jeder Komponente reduziert wurde; und dass das Verfahren ferner den Schritt des anschließenden miteinander Rührreibverschweißens der Komponenten umfasst.

2. Verfahren nach Anspruch 1, wobei die Metallkomponenten (14, 20) als Rohlinge ausgebildet sind und das Verfahren ferner den Schritt des Bearbeitens der großen Struktur nach dem Schritt des miteinander Verschweißens der Komponenten (14, 20) aufweist.

3. Verfahren nach Anspruch 2, wobei die Rohlinge (14, 20) vorverarbeitet sind, bevor die Komponenten miteinander verschweißt werden.

4. Verfahren nach einem der vorhergehenden Ansprüche, wobei das Merkmal (18, 24) in der Komponente (14, 20) während der Extrusion der Komponenten gebildet wird.

5. Verfahren nach einem der Ansprüche 1 bis 3, wobei das Merkmal (18, 24) durch Bearbeitung in der Komponente gebildet wird.

6. Verfahren nach einem der vorhergehenden Ansprüche, wobei die große Struktur als Holm (2) für einen Flügel eines Flugzeugs ausgebildet wird.

## Revendications

1. Procédé pour souder, l'un à l'autre, deux composants métalliques (14, 20) pour former une grande structure appropriée pour une utilisation en tant que composant aérospatial (2), le procédé comprenant les étapes :
de fourniture de deux composants métalliques (14, 20) à souder l'un à l'autre, chaque composant (14, 20) ayant une longueur (L), une largeur (W), une hauteur (H) et une surface à souder (16, 22),
**caractérisé en ce que** la surface à souder (16, 22) d'au moins l'un des composants métalliques (14, 20) comprend une caractéristique (18, 24) s'étendant sensiblement le long de la longueur du composant, dans lequel la caractéristique est une rainure (18, 24) créant deux zones de contact distinctes de chaque côté de la rainure, chaque zone de contact ayant une largeur (Ww) inférieure à la largeur (W) de chaque composant (14, 20), et la largeur de contact des surfaces à souder des deux composants étant réduite à une valeur inférieure à la largeur (Ww) de chaque composant ; et le procédé comprend en outre l'étape par la suite de soudage par friction-malaxage des composants l'un à l'autre.

2. Procédé selon la revendication 1, dans lequel les composants métalliques (14, 20) sont des billettes et le procédé comprend en outre l'étape d'usinage de la grande structure après l'étape de soudage des composants (14, 20) l'un à l'autre.

3. Procédé selon la revendication 2, dans lequel les billettes (14, 20) sont usinées grossièrement avant l'étape de soudage des composants l'un à l'autre.

4. Procédé selon l'une quelconque des revendications précédentes, dans lequel la caractéristique (18, 24) est formée dans le composant (14, 20) pendant l'extrusion du composant (14, 20).

5. Procédé selon l'une quelconque des revendications 1 à 3, dans lequel la caractéristique (18, 24) est formée dans le composant par usinage.

6. Procédé selon l'une quelconque des revendications précédentes, dans lequel la grande structure est un longeron (2) pour une aile pour un aéronef.
